# EUROPÄISCHE PATENTANMELDUNG

(11) **EP 1 260 193 A2**
(43) Veröffentlichungstag der Anmeldung: **27.11.2002**
(21) Anmeldenummer: 02008013.1
(22) Anmeldetag: 10.04.2002
(51) Int. Cl.: A61C 13/15, A61C 19/00

(54) **Dentales Lichtgerät**

(30) Priorität: 23.05.2001 DE 10125340
(71) Anmelder: Firma Ivoclar Vivadent AG, 9494 Schaan (LI)
(72) Erfinder: Plank, Wolfgang, 6830 Rankweil (AT); Burtscher, Peter, Dr., 6830 Rankweil (AT); Rohner, Gottfried, 9450 Altstätten (CH)
(74) Vertreter: Baronetzky, Klaus, Dipl.-Ing.

(57) **Zusammenfassung**

Eine Dentalrestaurationsvorrichtung mit einem Lichthärtgerät, das mit mindestens einer Halbleiter-Strahlungsquelle ausgerüstet ist. Zudem mit einer Lichtleitervorrichtung, mit welcher das Licht der Halbleiter-Strahlungsquelle einem Dentalrestaurationsteil zuleitbar ist. Die Halbleiter-Strahlungsquelle weist ein Emmisionsspektrum mit mindestens zwei Maxima auf, von denen eins bei etwa 420 nm liegt. Das Dentalrestaurationsteil ist aus einem Material aufgebaut, das mit zwei Katalysatoren ausgestattet ist.

## Beschreibung

Die Erfindung betrifft ein dentales Lichtgerät, welches nicht nur zum Aushärten von photopolymerisierbaren Dentalmaterialien geeignet ist, sondern z.B. auch zum Bleichen von Zähnen oder als Diagnostikgerät für Karies eingesetzt werden kann. Auch andere hier nicht erwähnte Therapiemöglichkeiten können mit dem dentalen Lichtgerät verwirklicht werden. Im folgenden wird das dentale Lichtgerät auch als Dentalrestaurationsvorrichtung bezeichnet.

Dentalrestaurationsvorrichtungen werden u.a. im Dentalbereich eingesetzt, um eine Lichtpolymerisation lichthärtbarer Kunststoffe vorzunehmen. Um eine große Leuchtdichte zu erreichen, werden regelmäßig energiereiche Lichtquellen eingesetzt, wie Halogen-Glühlampen, Xenon-Blitzlampen oder gar Hochspannungs-Entladungslampen. Die letztgenannten Lampen weisen zwar eine ausgesprochen hohe Lichtstärke und damit eine entsprechend hohe Leuchtdichte auf. Jedoch beträgt die Betriebsspannung mindestens 3,5 kV, und es ist ein entsprechendes Vorschaltgerät erforderlich, so dass derartige Lampen für die Anwendung in zahnärztlichen Praxen - mindestens soweit Handgeräte betroffen sind - ungeeignet sind.

Es sind zahlreiche Versuche unternommen worden, die Leuchtdichte von Beleuchtungsvorrichtungen für Dentalrestaurationsvorrichtungen zu verbessern, um eine vollständige Durchhärtung auch tiefliegender Schichten rasch zu erzielen. Bislang bekannte, übliche Beleuchtungsvorrichtungen mit einer Beleuchtungsstärke von beispielsweise 150 mW/cm² führen zwar bei entsprechend langer Lichtbeaufschlagung des zu polymerisierenden Kunststoffteils zu einer guten Oberflächenhärte. Tiefer liegende Schichten werden jedoch nicht oder nur unvollständig durchgehärtet. Es entsteht ein Härtegradient, der dazu führt, dass tieferliegende, mittlere Bereiche noch eher weich verbleiben oder später durchhärten als Oberflächenbereiche.

Die bekannten Beleuchtungsvorrichtungen führen zu Restaurationsergebnissen, die teilweise mit Randspaltenproblemen behaftet sind. Die bekannten lichthärtenden Kunststoffe schrumpfen leicht während des Härtens. Mit den bekannten Beleuchtungsvorrichtungen entsteht die Durchhärtung zunächst im oberen/äußeren Bereich des Materials. Die nachfolgende Durchhärtung der tieferliegenden, zentralen Bereiche führt zur Kontraktion und damit zur Randspaltenbildung.

Ferner sind auch seit längerem Beleuchtungsvorrichtungen bekannt geworden, die mit Halbleiter-Strahlungsquellen wie LEDs arbeiten. Beispielsweise ist aus der DE-GM 295 11 927 ein Lichthärtgerät bekannt geworden, dass eine im blauen Spektralbereich emittierende Leuchtdiode verwendet, die von einer Batterie oder einem Akkumulator gespeist wird.

Ferner ist es auch bereits vorgeschlagen worden, mehrere LEDs für die Speisung des Lichtleiterstabs zu verwenden. Hierdurch lässt sich die Lichtabgabe des Lichthärtgeräts verbessern. Unabhängig davon, ob die LEDs als Modul, also in einem gemeinsamen Kunststoffgehäuse, oder als Einzel-LEDs, also jeweils in einem Kunststoffgehäuse angeordnet sind und strahlen, ist ihre Lichtabgabe begrenzt. Die Kunststoffumhüllung wirkt nicht nur elektrisch isolierend, sondern dämmt auch die Wärmeabgabe, so dass auch bei Kühlung des Kunststoffgehäuses von aussen eine bestimmte Leistungsdichte des je lichtaussendenden Chips nicht überschritten werden sollte.

Ferner ist es bereits vorgeschlagen worden, als Halbleiter-Strahlungsquelle eine lichtemittierende Diode zu verwenden, die Strahlung im Bereich sichtbaren oder ultravioletten Lichts abgeben soll. Dies ist jedoch mit Nachteilen verbunden. So hat sich bei Untersuchungen herausgestellt, dass gerade bei hellen Materialien Farbänderungen durch die Aushärtung auftreten. Andererseits erlauben die bisher bekannten Systeme nicht die Verwendung von weißen Photoinitiatoren.

Zudem ist die Tendenz zur Randspaltenbildung bei den bekannten Systemen immer noch ungebrochen.

Daher liegt der Erfindung die Aufgabe zugrunde, ein Lichtgerät für Dentalzwecke gemäß dem Oberbegriff von Anspruch 1 zu schaffen, das die Neigung zur Randspaltenbildung lichthärtbarer Massen reduziert und dennoch kostengünstig herzustellen und flexibel einzusetzen ist.

Diese Aufgabe wird erfindungsgemäß durch Anspruch 1 gelöst. Vorteilhafte Weiterbildungen ergeben sich aus den Unteransprüchen.

Die erfindungsgemäße Dentalrestaurationsvorrichtung gemäß Anspruch 1 weist eine Halbleiter-Strahlungsquelle mit einem Emissionsspektrum mit mindestens 2 Maxima auf. Erfindungsgemäß sind die beiden Maxima deutlich voneinander getrennt. Damit wird erstmals die Möglichkeit eröffnet, Kunststoffmaterialien zu verwenden, die zwei verschiedene Katalysatorsysteme aufweisen, die nacheinander aushärten. Erfindungsgemäß ist es hiermit möglich, die Tendenz zur Randspaltenbildung zu reduzieren.

Erfindungsgemäß besonders günstig ist es, daß Strahlungsquellen zweier verschiedener Wellenlängen zur Aushärtung gleichzeitig verwendet werden können, um alle in Dentalmaterialien verwendeten Initiatoren von 400 bis 500 nm anzuregen.

Durch die Anregung einer Halbleiter-Strahlungsquelle mit einem Emissionsspektrum, dessen Maximum der spektralen Empfindlichkeit des ersten Katalysators entspricht, wird eine Voraushärtung vorgenommen. Bei Bedarf kann dann bereits eine Nachbearbeitung vorgenommen werden, nachdem das Kunststoffmaterial in diesem Zustand eine erhöhte Viskosität aufweist, aber noch verformbar ist. Durch Aktivierung der anderen Strahlungsquelle mit einem Emissionsspektrum mit einem Maximum, das von dem ersten Maximum deutlich verschieden ist und bevorzugt eine kurze Wellenlänge aufweist, läßt sich dann ein zweiter Katalysator aktivieren, dessen Empfindlichkeitsmaximum dem zweiten Maximum entspricht. Bevorzugt liegt dieses bei 420 nm. Durch die Aktivierung dieses Katalysators läßt sich das Kunststoffmaterial fertig durchhärten.

Überraschend stellt sich bei dieser Lösung auch ohne Nachbearbeitung und besonderen Maßnahmen eine geringere Neigung zur Randspaltenbildung ein. Durch die bislang übliche Lichthärtung mittels einer Strahlungsquelle bei Verwendung eines Katalysators erfolgt die Härtung regelmäßig so, dass zunächst die dünneren Randschichten und die Oberflächenschichten der Dentalrestauration gehärtet werden. Anschließend hieran werden die durch die Eindringtiefe der Strahlung schlechter erreichbaren tiefer liegenden und zentralen Schichten des Dentalmaterials gehärtet. Durch die Kontraktion dieser Bereiche werden Randspalten erzeugt, zumal die Oberflächenbereiche und Randbereiche der Dentalrestauration dann regelmäßig bereits eine höhere Festigkeit aufweisen als der noch weichere noch tief liegende Mittenbereich.

Erfindungsgemäß ist demgegenüber die mit der Härtung einhergehende Schrumpfung in einem Zustand vorgesehen, in dem das Material weder im Randbereich noch im Mittenbereich bereits vollständig hart ist. Hierdurch überwiegen die Adhäsionskräfte deutlich die der Verformung entgegenstehenden Kräfte, so dass die Schrumpfverformung kurzerhand darin besteht, dass sich die Schichtstärke des Restaurationsteils etwas reduziert. Dies ist unproblematisch und kann bei Bedarf auch durch das Auftragen zusätzlicher Schichten oder eine vorab vorgenommene erhöhte Schichtstärke kompensiert werden.

Es versteht sich, dass bei Bedarf die Möglichkeit besteht, die Auswahl von Katalysator und Emissionsmaximum je aufeinander abzustimmen und in weiten Bereichen an die Erfordernisse anzupassen. So kann bei Bedarf ein recht langwelliges Emissionsmaximum für die erste Strahlungsquelle realisiert sein, und der Katalysator für die erste Strahlungsquelle kann so ein Emissionsmaximum beispielsweise bei mehr als 500 nm aufweisen. Die Dentalmaterialien können sowohl mit Licht als auch zusätzlich mit Wärme ausgehärtet bzw. nachgehärtet werden.

Erfindungsgemäß sind insofern dualhärtende Systeme möglich.

In vorteilhafter Ausgestaltung der Erfindung wird das Lichtgerät mit den Strahlungsquellen direkt am Zahn aufgesetzt. In besonders günstiger Ausgestaltung ist eine Anschlusstülle (ein Überzug) vorgesehen, der gegen den Zahn elastisch anliegen kann und dafür sorgt, dass das emittierte Licht vollständig zur Dentalrestauration gelangt. Durch diese Ausgestaltung ist die Härtezeit exakt per reproduzierbar, nachdem nicht nur die vom Lichthärtgerät abgegebene Lichtleistung, sondern die zur Dentalrestauration gelangende Lichtleistung festlegbar ist.

Weitere Vorteile, Einzelheiten und Merkmale ergeben sich aus der nachstehenden Beschreibung zweier Ausführungsbeispiele anhand der Zeichnung.

### Es zeigen:

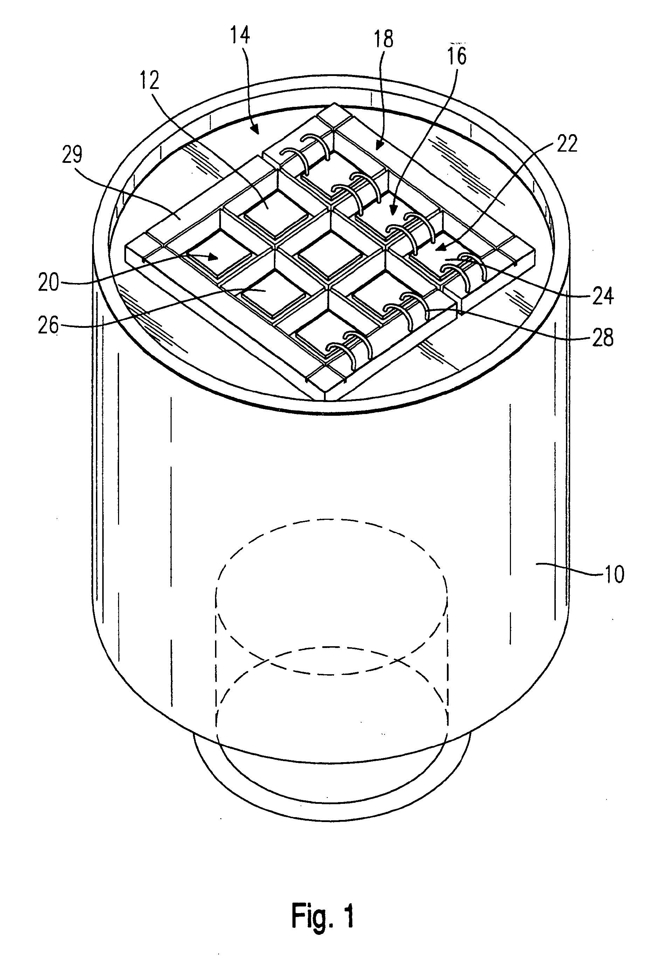

- Fig. 1: eine Ansicht eines Details einer erfindungsgemäßen Dentalrestaurationsvorrichtung, nämlich eines Basiskörpers mit integrierten Strahlungswellen in perspektivischer Darstellung;
- Fig. 2: eine weitere Ausführungsform einer erfindungsgemäßen Dentalrestaurationsvorrichtung, unter Darstellung einer modifizierten Ausgestaltung der Strahlungsquellen; und
- Fig. 3: eine Darstellung eines Spektrums der Strahlungsquellen einer erfindungsgemäßen Dentalrestaurationsvorrichtung.

Eine erfindungsgemäße Dentalrestaurationsvorrichtung weist einen Basiskörper 10 auf, der mit einer Mehrzahl von LED-Chips 12 an seiner Oberseite 14 bestückt ist. Die LED-Chips 12 sind je am Grunde von Mulden 16 befestigt und gegenüber der Oberfläche 18 versenkt. In dem dargestellten Ausführungsbeispiel sind 9 Chips 12 vorgesehen. Durch die Versenkung der Chips 12 in Mulden ergeben sich Mikroreflektoren, die die Lichtausbeute erhöhen.

Ein Teil der LED-Chips weist ein Emissionsmaximum von 470 nm. Ein weiterer Teil der LED-Chips weist ein Emissionsmaximum von 420 nm. Die Teile sind je zu Gruppen von LED-Chips zusammengeschaltet, wobei die Gruppen an je an einen Ausgang einer Steuervorrichtung angeschlossen sind und getrennt ansteuerbar sind.

Die Chips 12 der ersten Gruppe 22 bilden Halbleiter-Strahlungsquellen 24 mit einem Emissionsmaximum von 470 nm, und die Chips 12 der zweiten Gruppe 20 bilden Halbleiter-Strahlungsquellen 26 mit einem Emissionsmaximum von 420 nm.

Über an sich bekannte Bonddrähte 28 sind die einzelnen Chips 12 jeder Gruppe teils in Parallelschaltung, teils in Reihenschaltung mit Sammelschienen 29 verbunden.

Die Sammelschienen 29 sind über nicht dargestellte separate Versorgungsleitungen angeschlossen und mit einer nicht dargestellten Steuervorrichtung verbunden.

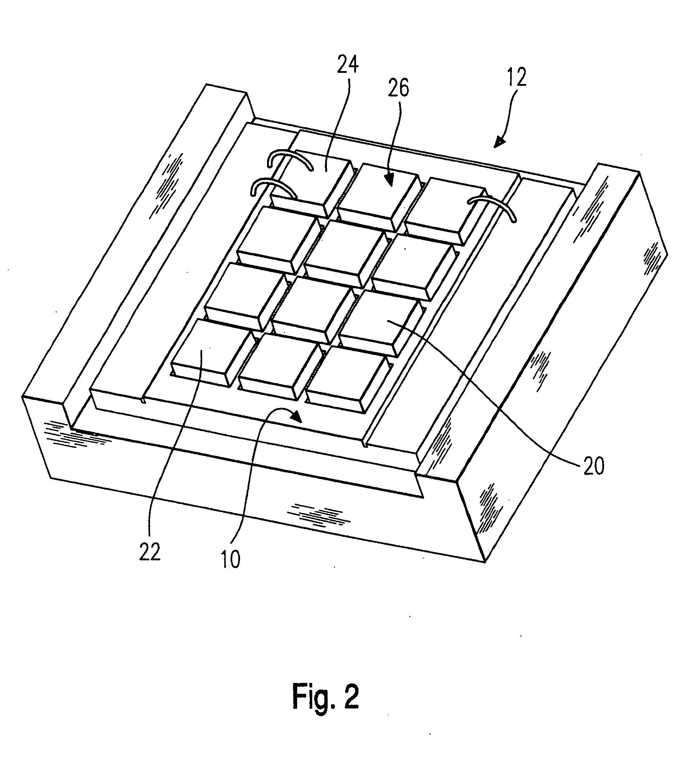

Eine weitere Ausführungsform einer erfindungsgemäßen Dentalrestaurationsvorrichtung ist aus Fig. 2 ersichtlich. Hier sind die Chips 12 eng benachbart montiert und auch hier ist eine erste Gruppe 22 von den Halbleiter-Strahlungsquellen 24 und eine zweite Gruppe 20 von Halbleiter-Strahlungsquellen 26 vorgesehen.

Mit der erfindungsgemäßen Steuervorrichtung werden zunächst die Halbleiter-Strahlungsquellen 24 eingeschaltet, wobei die erfindungsgemäße Dentalrestaurationsvorrichtung in unmittelbarer Nachbarschaft mit der Oberfläche des zu härtenden Restaurationsteils gebracht worden ist. In diesem Zustand wird der erste Katalysator aktiviert und führt zur Voraushärtung der photopolymerisierbaren Masse.

Anschließend hieran wird ggf. eine Nachbearbeitung vorgenommen, wenn dies als erforderlich angesehen wird. Auch kann beispielsweise auch eine weitere Schicht Dentalrestaurationsmaterial aufgetragen werden.

Hieraufhin werden die Halbleiter-Strahlungsquellen der zweiten Gruppe 20 eingeschaltet, und es wird eine Durchhärtung vorgenommen.

Es versteht sich, dass eine beliebige Verteilung der Strahlungsquellen im Rahmen der Erfindung möglich ist.

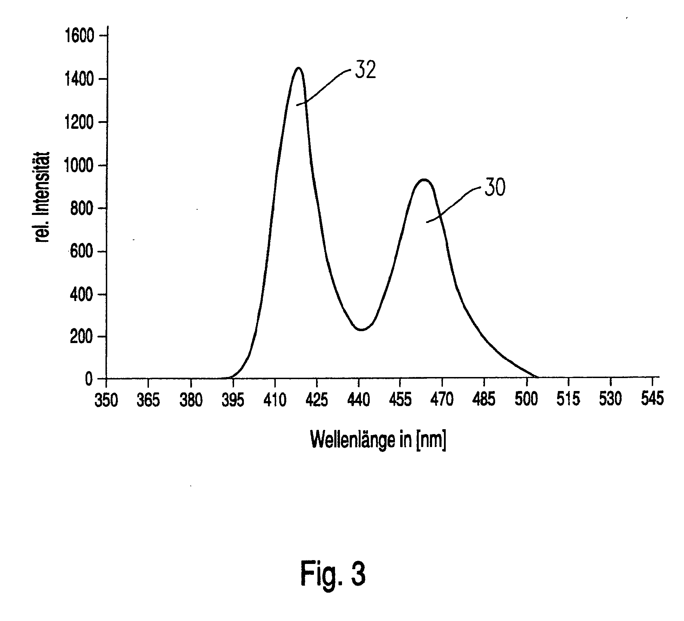

Fig. 3 zeigt die Emission der erfindungsgemäßen Dentalrestaurationsvorrichtung in dem Zustand, wenn alle Halbleiter-Strahlungsquellen eingeschaltet sind. Es ist ein erstes Maximum 30 und eine zweites Maximum 32 ersichtlich, wobei die Lichtintensität des zweiten Maximums 32, das bei etwa 420 nm liegt, deutlich höher ist.

## Patentansprüche

1. Dentales Lichtgerät, mit einem Lichthärtgerät, das mit mindestens einer Halbleiter-Strahlungsquelle ausgerüstet ist, mit einer Lichtleitvorrichtung, mit welcher das Licht der Halbleiter-Strahlungsquelle einem Dentalrestaurationsmaterial zuleitbar ist, **dadurch gekennzeichnet, dass** die Halbleiter-Strahlungsquelle (24, 26) ein Emissionsspektrum mit mindestens zwei Maxima (30, 32) aufweist, von denen eins bei etwa 420 nm liegt.

2. Dentales Lichtgerät nach einem der vorhergehenden Ansprüche, **dadurch gekennzeichnet, dass** das Lichthärtgerät mindestens zwei Halbleiter-Strahlungsquellen (24, 26) mit je einem Emissionsmaximum (30, 32) aufweist und dass das zweite Maximum (32) bei etwa 470 nm liegt.

3. Dentales Lichtgerät nach einem der vorhergehenden Ansprüche, **dadurch gekennzeichnet, dass** das Lichtgerät mindestens zwei Halbleiter-Strahlungsquellen (24, 26) mit je einem Emissionsmaximum aufweist und dass eine dritte Halbleiter-Strahlungsquelle mit einem Emissionsmaximum von 500 nm oder darüber vorhanden ist.

4. Dentales Lichtgerät nach einem der vorhergehenden Ansprüche, **dadurch gekennzeichnet, dass** eine Steuervorrichtung für die Ansteuerung der Halbleiter-Strahlungsquellen (24, 26) vorgesehen ist und dass die Ansteuerung von Halbleiter-Strahlungsquellen (24, 26) mit unterschiedlichen Emissionsmaxima zu unterschiedlichen Zeitpunkten erfolgt.

5. Dentales Lichtgerät nach Anspruch 4, **dadurch gekennzeichnet, dass** die Steuervorrichtung die Halbleiter-Strahlungsquelle (24) mit dem Emissionsmaximum (30) von etwa 470 nm vor der Halbleiter-Strahlungsquelle (26) mit dem Emissionsmaximum (32) von etwa 420 nm einschaltet.

6. Dentales Lichtgerät nach Anspruch 4, **dadurch gekennzeichnet, dass** die Steuervorrichtung die Halbleiter-Strahlungsquelle (24) mit dem Emissionsmaximum (30) von etwa 470 nm nach der Halbleiter-Strahlungsquelle (26) mit dem Emissionsmaximum (32) von etwa 420 nm einschaltet.

7. Dentales Lichtgerät nach einem der vorhergehenden Ansprüche, **dadurch gekennzeichnet, dass** die Intensitätsmaxima (30, 32) eine spektrale Steilheit von etwa 7 nm für eine Intensitätszunahme und/oder -abnahme um den Faktor 3 aufweisen.

8. Dentales Lichtgerät nach einem der vorhergehenden Ansprüche, **dadurch gekennzeichnet, dass** die relative Strahlungsintensität zwischen den Maxima auf einen Wert von weniger als einem Drittel, insbesondere etwa einem Siebtel maximalen Strahlungsintensität abfällt.

9. Dentales Lichtgerät nach einem der vorhergehenden Ansprüche, **dadurch gekennzeichnet, dass** das Dentalrestaurationstionsmaterial verschiedene Photoinitiatoren aufweist.

10. Dentales Lichtgerät nach einem der vorhergehenden Ansprüche, **dadurch gekennzeichnet, dass** die Halbleiter-Strahlungsquellen (24, 26) als LED-Chips (12) ausgebildet sind, die dicht benachbart zueinander angeordnet sind und zum Aushärten des Dentalrestaurationsmaterials in unmittelbarer Nähe des Zahns bringbar sind.

11. Dentales Lichtgerät nach einem der vorhergehenden Ansprüche, **dadurch gekennzeichnet, dass** die Halbleiter-Strahlungsquellen (24, 26) an der Spitze der Dentalrestaurationsvorrichtung angeordnet sind.

12. Dentales Lichtgerät nach einem der vorhergehenden Ansprüche, **dadurch gekennzeichnet, dass** eine Anschlusstülle vorgesehen ist, die sich um die Halbleiter-Strahlungsquellen (24, 26) erstreckt und während der Belichtung gegen den Zahn insbesondere elastisch bringbar ist.

13. Dentales Lichtgerät nach einem der vorhergehenden Ansprüche, **dadurch gekennzeichnet, dass** sich um die Strahlungsquellen (24, 26), insbesondere die LED-Chips (12) Reflexionsbereiche erstrecken.

14. Dentales Lichtgerät nach einem der vorhergehenden Ansprüche, **dadurch gekennzeichnet, dass** mit der Steuervorrichtung für die Ansteuerung der Strahlungsquellen (24, 26) in einem langwelligerem Bereich durch Einschaltung der entsprechenden Strahlungsquellen, beispielsweise von 470 nm oder 500 nm, eine Voraushärtung des aus dem Detalrestaurationsmaterial gebildeten Dentalrestaurationsteils durch Strahlung mit kürzerer Wellenlänge, insbesondere etwa 420 nm, eine Fertighärtung vornehmbar ist.

15. Dentales Lichtgerät nach Anspruch 14, **dadurch gekennzeichnet, dass** das Dentalrestaurationsmaterial zwischen Voraushärtung und Fertighärtung nachbearbeitbar ist.

16. Dentales Lichtgerät nach einem der vorhergehenden Ansprüche, **dadurch gekennzeichnet, dass** das Dentalrestaurationsmaterial mit zwei Katalysatoren ausgestattet ist, wobei das spektrale Empfindlichkeitsmaximum eines Katalysators bei etwa 420 nm liegt.
